# EUROPÄISCHE PATENTANMELDUNG

(11) **EP 1 010 901 A1**
(43) Veröffentlichungstag der Anmeldung: **21.06.2000**
(21) Anmeldenummer: 99124487.2
(22) Anmeldetag: 08.12.1999
(51) Int. Cl.: F16B 37/12, B29C 65/44

(54) **Metallischer Einsatz**

(30) Priorität: 08.12.1998 DE 19856611
(71) Anmelder: Böllhoff GmbH, 33649 Bielefeld (DE)
(72) Erfinder: Stumpf, Michael, 33609 Bielefeld (DE); Borchard, August, 32657 Lemgo (DE); Jankowski, Peter, 33605 Bielefeld (DE)
(74) Vertreter: Wehnert, Werner, Dipl.-Ing. Patentanwälte Hauck, Graalfs, Wehnert, Döring, Siemons

(57) **Zusammenfassung**

Beschrieben wird ein metallischer Einsatz, insbesondere Gewindeeinsatz, zum Einbetten in eine Aufnahmebohrung eines Kunststoffteiles. Der Einsatz besitzt einen hülsenförmigen Grundkörper, auf dessen Mantelfläche mindestens eine Reihe von Zähnen in Umfangsrichtung beabstandet zueinander angeordnet sind. Jeder Zahn hat eine Form, die sich vom Zahnanfang in Ausziehrichtung verbreitert und am Zahnende in eine Endfläche mündet, die quer zur Ausziehrichtung verläuft. Hierdurch entstehen zwischen den Zähnen Zwischenräume, die sich in Ausziehrichtung verjüngen, jedoch zwischen den Endflächen der Zähne offen bleiben. Diese Verzahnung stellt sicher, daß Einpreßkräfte zum Einpressen des Einsatzes in das Kunststoffteil minimiert und der Ausziehwiderstand des Einsatzes maximiert werden.

## Beschreibung

Die vorliegende Erfindung betrifft einen Einsatz aus Metall, insbesondere einen Gewindeeinsatz, zum Einbetten in eine Aufnahmebohrung eines Kunststoffteiles.

Derartige metallische Einsätze, insbesondere Gewindeeinsätze, werden in die Aufnahmebohrung des Kunststoffteils üblicherweise in der Weise eingebracht, daß der Einsatz in den durch Wärme oder Ultraschall aufgeschmolzenen Kunststoff eingepreßt wird (Warmeinbetten, Ultraschalleinschweißen). Es ist auch bekannt, den Einsatz durch Kalteindrücken oder Umspritzen in den Werkstoff des Kunststoffteils einzubringen. Um den Einsatz gegen Herausziehen wie auch gegen Verdrehen zu sichern, ist der Einsatz an seiner Umfangsfläche üblicherweise mit Oberflächenunregelmäßigkeiten wie z.B. Hinterschneidungen, Nuten, Rillen, Verzahnungen und dgl. versehen. So zeigt beispielsweise das US-Patent Nr. 4,046,181 einen hülsenförmigen Einsatz, bei dem die Umfangsfläche aus in axialer Richtung abgestuften kegelstumpfförmigen Abschnitten besteht, die durch Einkerbungen mit einer Verzahnung versehen sind.

Durch derartige Maßnahmen läßt sich zwar der Auszieh- und Verdrehwiderstand des Einsatzes erhöhen. Gleichzeitig wird hierdurch jedoch der Einpreßwiderstand des Einsatzes erhöht. Die Forderung nach einem hohen Auszieh- und Verdrehwiderstand des Einsatzes steht somit in gewissem Widerspruch zu der Forderung nach einem möglichst geringen Einpreßwiderstand.

Der vorliegenden Erfindung liegt die Aufgabe zugrunde, einen Einsatz aus Metall zum Einbetten in ein Loch eines Kunststoffteiles zu schaffen, dessen Einpreßwiderstand minimiert und dessen Auszieh- und Verdrehwiderstand maximiert werden.

Diese Aufgabe wird erfindungsgemäß gelöst durch einen Einsatz aus Metall zum Einbetten in eine Aufnahmebohrung eines Kunststoffteiles mit einem Grundkörper, der eine bezüglich einer mittigen Achse umlaufende Mantelfläche aufweist, und mindestens einer Reihe von Zähnen, die auf der Mantelfäche des Grundkörpers in Umfangsrichtung beabstandet zueinander angeordnet sind, wobei jeder Zahn eine keilartige Form hat, die sich von einem Zahnanfang in einer axialen Richtung des Einsatzes, der Ausziehrichtung, zum Zahnende hin verbreitert und am Zahnende eine quer zur Ausziehrichtung verlaufende Endfläche aufweist, so daß zwischen den Zähnen Zwischenräume entstehen, die sich von den Zahnanfängen in Ausziehrichtung zu den Zahnenden hin verjüngen, jedoch zwischen den Endflächen der Zähne offen bleiben.

Aufgrund dieser Gestaltung der auf der Mantelfläche des Grundkörpers vorgesehenen Zähne kann beim Einpressen des metallischen Einsatzes in das Kunststoffteil der Werkstoff durch die Zwischenräume zwischen den Zähnen an den Zähnen vorbei in den Bereich hinter den Endflächen der Zähne fließen. Hierdurch verringert sich der Einpreßwiderstand des Einsatzes erheblich. Der Bereich hinter den Endflächen der Zähne bildet gewissermaßen Taschen, in welche der plastische Kunststoff fließen und in welcher er dann relaxieren und ggf. aushärten kann. Dies führt zu einer wesentlichen Erhöhung des Ausziehwiderstands des Einsatzes. Gleichzeitig sorgen die von der Mantelfläche des Grundkörpers radial abstehenden Zähne für einen relativ großen Verdrehwiderstand.

Vorzugsweise ist an der Oberseite jedes Zahns eine radial vorstehende, axial verlaufende Rippe vorgesehen. Dies erhöht den Verdrehwiderstand des Einsatzes um ein Vielfaches.

Weitere vorteilhafte Ausgestaltungen der Erfindung gehen aus den Unteransprüchen hervor.

Anhand der Zeichnungen wird ein Ausführungsbeispiel der Erfindung näher erläutert. Es zeigt:
Fig. 1 eine perspektivische Ansicht eines metallischen Einsatzes und
Fig. 2 eine perspektivische Detailansicht eines Zahnes des in Fig. 1 gezeigten Einsatzes.

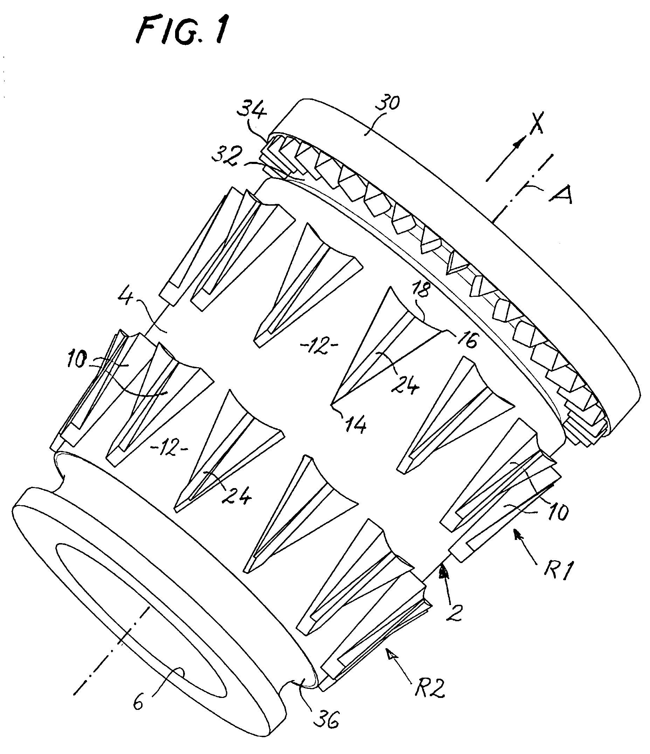

Der in Fig. 1 dargestellte Einsatz besitzt einen buchsen- oder hülsenförmigen Grundkörper 2 mit einer äußeren Mantelfläche 4 und einem mittigen Loch 6, das zu einer Achse A konzentrisch verläuft und als Durchgangsloch oder Sackloch ausgebildet ist. Vorzugsweise ist der Einsatz als Gewindeeinsatz ausgebildet, d.h., daß das Loch 6 mit einem (nicht gezeigten) Gewinde versehen ist. Es sei jedoch darauf hingewiesen, daß das Loch auch in anderer Weise, z.B. glatt oder profiliert, ausgebildet sein kann, so daß der Einsatz als Distanzbuchse, Schlauchstutzen, Dichteinsatz oder dergleichen dienen kann. Je nach Anwendungszweck könnte das Loch auch ganz weggelassen werden. So könnte der Einsatz auch mit einem axial abstehenden Gewindebolzen versehen sein.

Der aus Metall bestehende Einsatz dient dazu, in eine entsprechend dimensionierte Aufnahmebohrung eines Kunststoffteils (nicht gezeigt) eingebettet zu werden. Das Einbetten kann in herkömmlicher Weise durch Plastifizieren des Kunststoffs mittels Erhitzen oder Ultraschall (Warmeinbetten, Ultraschalleinschweißen, induktives Einbetten) erfolgen. Grundsätzlich ist es auch möglich, den Einsatz in kaltem Zustand in das Loch des Kunststoffteils einzudrücken (Kalteindrücken). Auch kann der Einsatz durch Umspritzen bei der Fertigung des Kunststoffteils eingebettet werden.

Der in Fig. 1 gezeigte Einsatz wird in das (nicht gezeigte) Kunststoffteil so eingebettet, daß sein in Fig. 1 linkes unteres Ende im Inneren des Kunststoffteils liegt, während das in Fig. 1 rechte obere Ende außen liegt. Die mit dem Pfeil X bezeichnete axiale Richtung wird daher in der folgenden Beschreibung wie auch in den Ansprüchen mit 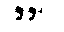 Ausziehrichtung" bezeichnet, da in dieser Richtung bei entsprechender Belastung die Ausziehkräfte am Einsatz angreifen.

Wie aus Fig. 1 ersichtlich ist, ist die Mantelfläche 4 des Grundkörpers 2 mit zwei Reihen R1, R2 von Zähnen 10 versehen. Es können auch mehr als zwei und ggf. auch nur eine Reihe von Zähnen 10 vorgesehen werden. Die Zähne 10 jeder Reihe R1 bzw. R2 sind in Umfangsrichtung mit Abstand zueinander angeordnet, wobei die Anordnung so getroffen ist, daß die Zähne 10 der einen Reihe R1 bezüglich der Zähne 10 der anderen Reihe R2 in Umfangsrichtung versetzt zueinander liegen.

Aufgrund der Beabstandung der Zähne 10 entstehen zwischen den Zähnen Zwischenräume 12. Jeder Zahn 10 hat eine Form, die sich vom Zahnanfang 14 in Ausziehrichtung X zum Zahnende 16 hin verbreitert, so daß sich die Zwischenräume 12 in Ausziehrichtung X entsprechend verjüngen. Der Abstand zwischen den Zähnen 10 ist hierbei so gewählt, daß die Zwischenräume 12 auch an ihrer engsten Stelle zwischen den Zahnenden 16 offen bleiben. Der Zweck dieser Ausgestaltung wird im folgenden noch genauer erläutert.

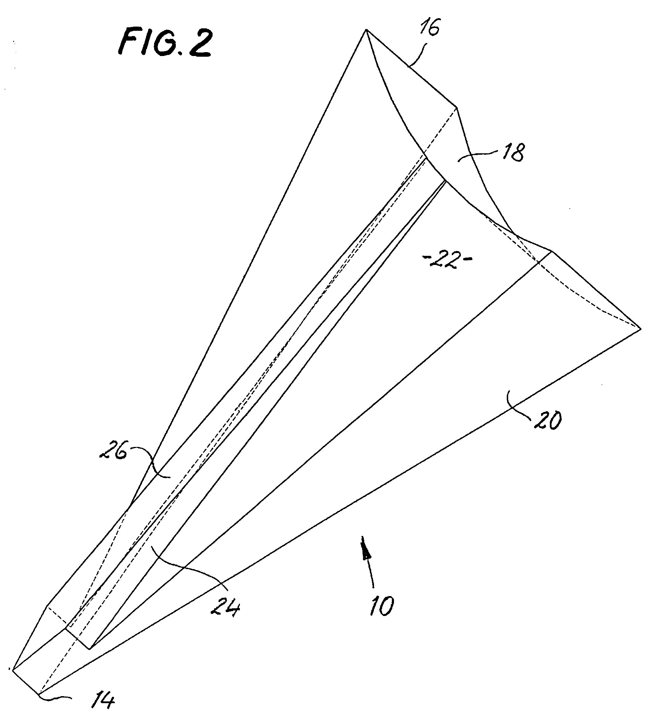

Wie aus Fig. 1 und insbesondere Fig. 2 hervorgeht, hat die Grundfläche jedes Zahnes 10 ungefähr die Form eines gleichsehenkligen Dreiecks, wobei jeder Zahn 10 von zwei Seitenflächen 20 und einer Endfläche 18 begrenzt wird, die jeweils quer zur Mantelfläche 4 des Grundkörpers 2 verlaufen. Die Seitenflächen 20 schließen am Zahnanfang 14 einen spitzen Winkel zwischen sich ein, der vorzugsweise zwischen 30 und 60° liegt. Je weicher der Werkstoff des Kunststoffteiles ist, desto größer wird der Winkel gewählt. Wie in den Fig. deutlich zu sehen ist, ist die Endfläche 18 jedes Zahnes 10 - aus noch zu erläuternden Gründen - konkav gerundet.

Jeder Zahn 10 ist an seiner von der Mantelfläche 4 des Grundkörpers 2 abgewandten Oberseite 22 mit einer radial vorstehenden, axial verlaufenden Rippe 24 versehen. Man kann sich die Rippe 24 durch beidseitig zur Rippe 24 gebildete Ausnehmungen in der Oberseite 22 des Zahnes 10 gebildet vorstellen. Im dargestellten Ausführungsbeispiel ist die Anordnung so getroffen, daß die radiale Dicke jedes Zahnes 10 in Ausziehrichtung X zunimmt und die radiale Dicke der zugehörigen Rippe 24 in Ausziehrichtung X abnimmt. Hierbei hat die Rippe 24 am Zahnanfang 16 die gleiche spitzwinklige Form wie der Zahn 10 selbst. Der 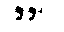 Kamm" d.h. die Oberseite 26 der Rippe 24 ist im dargestellten Ausführungsbeispiel eben ausgebildet. Je nach dem Werkstoff des den Einsatz aufnehmenden Kunststoffteils kann die Oberseite 26 jedoch auch anders gestaltet, beispielsweise mit einer Verzahnung, einer Hohlkehle, einem unterschiedlichen Neigungswinkel und dgl. versehen werden.

Wie in Fig. 1 zu sehen ist, ist die Mantelfläche 4 des Grundkörpers 2 kegelstumpfförmig ausgebildet. Zweckmäßigerweise liegt der Kegelwinkel in der Größenordnung von 8°. Dies erleichtert das Einbetten des Einsatzes in das Kunststoffteil. Darüber hinaus ermöglicht die entsprechende konische Form des Loches des Kunststoffteiles das Entformen des durch Spritzgießen hergestellten Kunststoffteils.

Der Grundkörper 2 hat an seinem in Fig. 1 oberen rechten Ende, dem Ausziehende, einen Ringflansch 30, der den oberen Abschluß des in das Kunststoffteil eingesetzten Einsatzes bildet. Wie ersichtlich, ist zwischen dem Ringflansch 30 und der Mantelfläche 4 eine umlaufende Ringnut 32 vorgesehen. Ferner ist der Ringflansch 30 auf der dem Ausziehende entgegengesetzten Stirnseite mit einer Verzahnung 34 versehen. Vorzugsweise ist das Loch 6 im Bereich des Ringflansches 30 mit einer konischen Schutzansenkung (nicht gezeigt) versehen, die im Falle eines Gewindeeinsatzes als Einführhilfe bei der Schraubenmontage dient und Beschädigungen des Innengewindes beispielsweise beim Einbetten durch Ultraschall verhindert,

Angrenzend am anderen Ende des Einsatzes befindet sich eine Ringnut 36 (Einstich), die einen gerundeten Querschnitt hat.

Im folgenden wird das Verhalten des beschriebenen Einsatzes während des Einbettvorganges wie auch im eingebetteten Zustand beschrieben. Wird der Einsatz - vorzugsweise unter Wärmeeinwirkung - in die Aufnahmebohrung des (nicht gezeigten) Kunststoffteils entgegen der Ausziehrichtung X eingepreßt, so dringen die Zähne 10 mit ihren in Längsrichtung verlaufenden schmalen Rippen 24 aufgrund ihrer spitzwinkligen Form ohne größeren Widerstand in den plastifizierten Kunststoff ein. Der Kunststoff kann hierbei durch die Zwischenräume 12 in Ausziehrichtung X fließen. Da die Zwischenräume 12 auch an ihrer engsten Stelle zwischen den Zahnenden 16 offen sind, gelangt der Kunststoff in den Bereich hinter die Zähne 10, wo durch die gerundeten Endflächen 18 gebildete taschenartige Stauräume den verdrängten Kunststoff aufnehmen. Die Rippen 24 helfen hierbei mit, den plastifizierten Kunststoff in die taschenartigen Stauräume zu leiten. Gleichzeitig füllt der plastifizierte Kunststoff die Ringnut 36, die mit einer (nicht gezeigten) Verzahnung versehen sein kann, um das 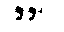 Aufsteigen" des Kunststoffes zu erleichtern. Auch dringt der plastifizierte Kunststoff in die Ringnut 32 sowie in die Zwischenräume zwischen den Zähne der Verzahnung 34.

Aufgrund der beschriebenen Form der Zähne 10 mit ihren Rippen 24, der Ringnut 36 und der Ringnut 32 mit der Verzahnung 34 sind somit nur vergleichsweise kleine Einpreßkräfte erforderlich, um den Einsatz in das Kunststoffteil einzupressen.

Wenn jedoch der Einsatz in dem ausgehärteten Kunststoff des Kunststoffteils eingebettet ist, verleihen die beschriebenen Gestaltungsmerkmale dem Einsatz einen hohen Widerstand sowohl gegen Ausziehen wie auch gegen Verdrehen: Die Endflächen 18 der Zähne 10 bilden, wie bereits erwähnt, taschenartige Stauräume, in denen sich der durch die Zwischenräume 12 verdrängte Kunststoff sammelt. Hierdurch wird der Einsatz gegen axiales Herausziehen (in Ausziehrichtung X) gesichert. Die Abrundung der Endflächen 18 sorgt im Vergleich zu ebenen Endflächen für einen deutlich erhöhten Ausziehwiderstand, der durch die Ringnuten 36 und 32 weiter erhöht wird. Der Ringflansch 30, der einen ungewollten Austritt von plastifiziertem Material aus der Aufnahmebohrung des Kunststoffteils verhindert, komprimiert überdies das plastifizierte Material in den Stauräumen hinter den Endflächen 18 der Zähne, was ebenfalls zur Erhöhung des Ausziehwiderstandes beiträgt.

Eine hohe Verdrehsicherheit des Einsatzes ergibt sich einerseits durch die Seitenflächen 20 der Zähne 10 und andererseits durch die Rippen 24. Wie sich aus den Figuren ergibt, haben die Zähne 10 und die Rippen 24 eine solche Form, daß ihre in Umfangsrichtung projezierte Gesamtfläche Belastungen des Einsatzes in Umfangsrichtung einen hohen Widerstand entgegensetzt. Die in Umfangsrichtung projezierte Gesamtfläche von Zahn 10 und Rippe 24 kann zum Zahnende 16 hin zunehmen, so daß dort der Widerstand am größten ist. Im übrigen trägt die am Ringflansch 30 vorgesehene Verzahnung 34 zusätzlich zur Erhöhung des Verdrehwiderstandes bei.

Wie für den Fachmann ersichtlich, ist ein Großteil der beschriebenen Vorteile auch bei einem erfindungsgemäßen Einsatz wirksam, der durch Kalteinpressen oder durch Umspritzen des Einsatzes bei der Fertigung des Kunststoffteils eingebettet wird.

## Patentansprüche

1. Einsatz aus Metall zum Einbetten in eine Aufnahmebohrung eines Kunststoffteiles, mit
einem Grundkörper (2), der eine bezüglich einer mittigen Achse (A) umlaufende Mantelfläche (4) aufweist, und
mindestens einer Reihe (R1) von Zähnen (10), die auf der Mantelfläche (4) des Grundkörpers (2) in Umfangsrichtung beabstandet zueinander angeordnet sind,
wobei jeder Zahn (10) eine keilartige Form hat, die sich von einem Zahnanfang (14) in einer axialen Richtung des Einsatzes, der Ausziehrichtung (X), zum Zahnende (16) hin verbreitert und am Zahnende (16) eine quer zur Ausziehrichtung (X) verlaufende Endfläche (18) aufweist, so daß zwischen den Zähnen (10) Zwischenräume (12) entstehen, die sich von den Zahnanfängen (14) in Ausziehrichtung (X) zu den Zahnenden (16) hin verjüngen, jedoch zwischen den Endflächen (18) der Zähne (10) offen bleiben.

2. Einsatz nach Anspruch 1, dadurch gekennzeichnet, daß jeder Zahn quer zur Mantelfläche (4) des Grundkörpers (2) verlaufende Seitenflächen (20) aufweist, die sich am Zahnanfang (14) unter einem spitzen Winkel schneiden.

3. Einsatz nach einem der vorhergehenden Ansprüche, dadurch gekennzeichnet, daß die Grundfläche jedes Zahnes (10) ungefähr die Form eines gleichschenkligen Dreiecks hat.

4. Einsatz nach einem der vorhergehenden Ansprüche, dadurch gekennzeichnet, daß die Endfläche (18) jedes Zahnes (10) konkav gerundet ausgebildet ist.

5. Einsatz nach einem der vorhergehenden Ansprüche, dadurch gekennzeichnet, daß an der Außenseite jedes Zahnes (10) eine radial vorstehende, axial verlaufende Rippe (24) vorgesehen ist.

6. Einsatz nach den Ansprüchen 2 und 5, dadurch gekennzeichnet, daß die Rippe (24) jedes Zahnes (10) am Zahnanfang (16) die gleiche spitzwinklige Form wie der Zahn (10) hat.

7. Einsatz nach Anspruch 5 oder 6, dadurch gekennzeichnet, daß die radiale Dicke jedes Zahnes (10) in Ausziehrichtung (X) zunimmt und die radiale Dicke jeder Rippe (24) in Ausziehrichtung (X) abnimmt.

8. Einsatz nach einem der vorhergehenden Ansprüche, dadurch gekennzeichnet, daß zwei oder mehr in axialer Richtung beabstandete Zahnreihen (R1, R2) vorgesehen sind, wobei die Zähne (10) einer Reihe (R1) in Umfangsrichtung versetzt zu den Zähnen (10) der benachbarten Reihe (R2) angeordnet sind.

9. Einsatz nach einem der vorhergehenden Ansprüche, dadurch gekennzeichnet, daß die Mantelfläche (4) des Grundkörpers (2) kegelstumpfförmig ausgebildet ist.

10. Einsatz nach einem der vorhergehenden Ansprüche, dadurch gekennzeichnet, daß der Grundkörper (2) an seinem einen axialen Ende mit einem Ringflansch (30) versehen ist.

11. Einsatz nach Anspruch 10, dadurch gekennzeichnet, daß der Ringflansch auf seiner von dem axialen Ende abgewandten Stirnseite mit einer Verzahnung (34) versehen ist.

12. Einsatz nach Anspruch 10 oder 11, dadurch gekennzeichnet, daß der Grundkörper (2) an seinem anderen axialen Ende mit einer Ringnut (36) versehen ist.

13. Einsatz nach einem der vorhergehenden Ansprüche, dadurch gekennzeichnet, daß der Grundkörper (2) mit einem mittigen Loch (6) versehen ist, das als Durchgangs- oder Sackloch ausgebildet ist.

14. Einsatz nach Anspruch 13, dadurch gekennzeichnet, daß das Loch mit einem Gewinde versehen ist.
